# EUROPEAN PATENT APPLICATION

(11) **EP 1 916 340 A1**
(43) Date of publication of application: **30.04.2008**
(21) Application number: 07380278.7
(22) Date of filing: 16.10.2007
(51) Int. Cl.: E02B 15/04

(54) **Suction-based system for the recovery of oil spills on water**

(30) Priority: 19.10.2006 ES 200602312 U
(71) Applicant: Ortiz Vega, Juan, 41710 Utreta, Sevilla (ES)
(72) Inventor: Ortiz Vega, Juan, 41710 Utreta, Sevilla (ES)
(74) Representative: Gil-Vega, Victor

(57) **Abstract**

Suction-based system for the recovery of oil spills on water, characterised by the fact that it consists of the positioning on a vessel of the following elements: A storage tank (2) for the storage of oil extracted from the surface of the water; A vacuum pump (1) connected to the storage tank to activate and maintain the suction pressure in the interior of the tank; A hose (6) equipped with a longitudinal nozzle to extract the oil from the surface of the water and pipe it to the storage tank and a flotation and movement structure (9) for the system to maintain the nozzle of the hose on the surface of the water and facilitate access to oil slicks.

## Description

### OBJECT OF THE INVENTION

The present description relates to a system which has been specially designed to extract oil spills in the sea in a simple and effective manner so as to avoid their environmental impact and recover the same for their subsequent use.

### BACKGROUND AND THE STATE OF THE ART

Everyone is familiar with the harmful effects of the far too common case of "accidents" which result in oil spills into the sea.

Currently the most industrialised economies in the world continue to depend upon energy resources whereby oil occupies a fundamental role.

In practice, this means that every day there are thousands of oil tankers of increasingly greater tonnage so as to reduce transport costs navigating the world's waterways with the risk of oil spills this entails.

The state of the art in the field is based on the use of pumps which draw the oil directly from the sea. These are solely effective when the layer of oil is of considerable thickness, given that otherwise they mainly draw water instead of oil, and as a consequence the process is extremely time-consuming and laborious, as the water pumped for example to a vessel must then be pumped once more to the exterior of the same, with the results obtained being limited in practice.

Meanwhile, the thinner layers of oil stay in the sea, often reaching the coast in the form of glutinous oil slicks for which attempts at manual removal are made, although this requires a massive outlay of human resources and is of doubtful effectiveness.

The system which this invention proposes resolves this problem, enabling recovery of the oil in a rapid and effective manner.

### DESCRIPTION OF THE INVENTION

The "Suction-based system for the recovery of oil spills on water" consists of a device comprising a series of accessories to be installed on oil tankers themselves or on specially designed vessels consisting of the following elements:
Storage Tank for the storage of the oil extracted from the surface of the water.
A vacuum pump connected to the storage tank to activate and maintain the suction pressure in the interior of the tank.
A hose equipped with a longitudinal nozzle to extract the oil spill from the surface of the water and pipe it to the storage tank.
A flotation and movement structure to keep the nozzle of the hose on the surface of the water and facilitate access to the oil slicks.

Accordingly, the vessel may install as many suction systems as may be considered necessary. Once activated, for example by way of hydraulic arms which move the ends of the hoses to the working position, and once the necessary pressure level has been reached for suction in the storage tanks, the system commences with the suction of the oil slicks located on the surface of the water due to the difference in density until leaving the surface completely clean.

### DESCRIPTION OF THE FIGURES

In order to demonstrate the functioning of the invention "Suction-based system for the recovery of oil spills on water" the following figures represent the practical application of the invention described.
Figure (1): Main diagram of the "Suction-based system for the recovery of oil spills on water".
Figure (2): Main view of a vessel operating with the "Suction-based system for the recovery of oil spills on water".

In the above figures, the elements numbered are as follows:
(1): Vacuum pump.
(2): Storage tank.
(3): Pressure gauge.
(4): Drain pipe.
(5): Opening and closing drainage valve.
(6): Suction hose
(7): Opening and closing suction valve.
(8): Hose nozzle.
(9): Floats.
(10): Hydraulic arms.

### PREFERRED EMBODIMENT

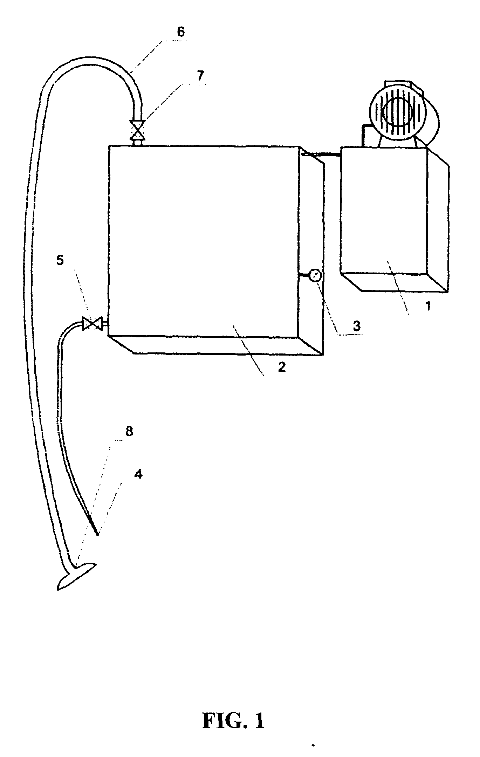

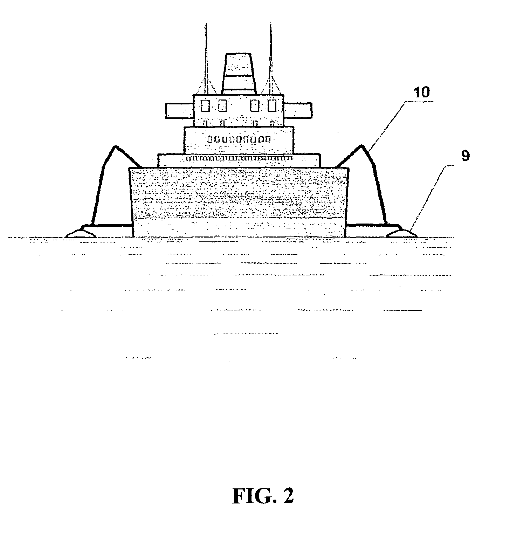

Figure 1 and figure 2 provide an example of the preferred embodiment of the "Suction-based system for the recovery of oil spills on water" applied to a vessel equipped with a hose on each side, a vacuum pump (1) connected to a storage tank (2) which includes a pressure gauge (3), a drain pipe (4) located at the lower part of the tank equipped with the corresponding regulation valve (5) and a suction hose (6) located at the upper part of the tank equipped with an opening and closing valve (7).

In this manner, the suction hose (6) is connected at its nozzle to a metallic piece which terminates at the loose end with an approximately rectangular configuration (8) with a size of approximately 40*100 millimetres, by way of example.

Finally, the suction system is complemented with various floats (9) which ensure that the end of the hose (6) is continually positioned on the surface of the water, together with hydraulic arms (10) controlled from the deck of the vessel from which the hoses (6) hang at an approximate height of two metres, ensuring the mobility of the suction end (8) until carrying out the complete extraction of the oil slick.

The functioning of the system commences with the activation of the vacuum pump (1) with the suction valve (7) initially kept closed to generate a depression in the storage tank (2) until reaching the working pressure as indicated on the pressure gauge (3) incorporated for this purpose.

Following this, once the tank (2) has reached the working pressure the suction valve (7) is opened, thereby activating the suction process with the nozzle of the hose (8) in the convenient position, and the system begins to carry out the extraction of the oil slick from the surface of the water.

Finally, when the storage tank (2) is full or the extraction work is concluded, the tanks (2) may be emptied selectively, for by simply leaving the tanks to settle for a period of time the little water which may have been drawn into the tanks will accumulate in the lower part of the tank, enabling its extraction by simply activating the corresponding drain pipe (4 and 5).

It is not considered necessary to provide a more extensive description for any expert in the field to understand the scope of the invention and the advantages which it offers. The materials employed, the forms, the sizes, the number of suction hoses and the positioning of the elements which are described may be subject to variation provided that such variations do not signify an alteration to the essential nature of the invention.

## Claims

1. Suction-based system for the recovery of oil spills on water, **characterised by** the fact that it consists of the positioning on a vessel of the following elements:
A storage tank for the storage of oil extracted from the surface of the water.
A vacuum pump connected to the storage tank to activate and maintain the suction pressure in the interior of the tank.
A hose equipped with a longitudinal nozzle to extract the oil from the surface of the water and pipe it to the storage tank.
A flotation and movement structure for the system to maintain the nozzle of the hose on the surface of the water and facilitate access to oil slicks.
